# EUROPEAN PATENT SPECIFICATION

(11) **EP 3 692 115 B1**
(45) Date of publication and mention of the grant of the patent: **09.12.2026**
(21) Application number: 18816211.9
(22) Date of filing: 03.10.2018
(51) Int. Cl.: C10J 3/22, C10J 3/30, C10J 3/34, C10J 3/74

(54) **APPARATUS AND METHOD FOR PRODUCING SYNTHESIS GAS**
VORRICHTUNG UND VERFAHREN ZUR HERSTELLUNG VON SYNTHESEGAS
APPAREIL ET PROCÉDÉ PERMETTANT DE PRODUIRE UN GAZ DE SYNTHÈSE

(30) Priority: 05.10.2017 HU 1700409
(43) Date of publication of application: 12.08.2020
(73) Proprietor: Deim, Laszlo, 1221 Budapest (HU); Integroup Zrt., 1114 Budapest (HU); Horge International Kft., 8200 Veszprém (HU)
(72) Inventor: RAISZ, Iván, 3561 Felsözsolca (HU); HENGER, Károly, 8220 Balatonalmádi (HU); NYÉKI, József, 3778 Varbó (HU); UDVARHELYI, Miklós, 8220 Balatonalmáldi (HU)
(74) Representative: Kereszty, Marcell
(86) International application number: PCT/HU2018/000043
(87) International publication number: WO 2019/069107

(56) References cited:
- WO-A1-2004/072210
- US-A1- 2010 024 298

## Description

### TECHNICAL FIELD

The invention relates to an apparatus and method for producing synthesis gas, particularly to an improved apparatus and method for the energy- and material-efficient production of haloid-free synthesis gas from waste material. In the context of the present application, purification from haloids or halogens (or dehalogenization) refers to a process for removing halogens, halogen compounds, or halogen derivatives, such as hydrogen haloids.

### BACKGROUND ART

Refuse-derived fuel (RDF) produced from waste materials is predominantly utilized by combustion. The greatest challenge faced by technical solutions based on combustion is the contamination of flue gases. Flue gases can be contaminated not only by combustion residues of the substances (e.g. salts, metals) originally present in the waste material, but also by substances produced during combustion.

In refuse incineration plants attempts at preventing the formation of tar are made by trying to achieve as high temperature in the combustion space as possible. This is, however, limited by the moisture content of the waste material and the excess air necessarily applied for the process, where, moreover, oxygen is present in a diluted form. The formation of tar poses a problem not only because it has to be removed from the flue gases after the combustion process, but also because it contains substances with high calorific value that are discarded as slag without utilization, thereby deteriorating the efficiency of the entire system.

An even more serious challenge is that the flue gases may contain dioxins and furans in concentrations harmful to humans. These materials are not introduced to the system with the input materials, but are produced during the combustion process. Waste (particularly household waste) always contains table salt (NaCl) and PVC, which leads to hydrochloric acid or chlorine appearing in high-temperature flue gases. As organic materials undergo decomposition at high temperatures, the flue gases always contain such carbon-containing radicals with which the haloids can react rapidly, forming very stable dioxins. The formation of dioxin, therefore, cannot be prevented by applying very high-temperature combustion, because dioxins are produced only when the flue gases are already cooling off and their temperature drops below approximately 450 - 500 °C.

We are therefore left with the compromise solutions of either quickly cooling off the flue gases (with significant costs), foregoing the recovery of their heat, or utilizing the produced heat and removing dioxins from the flue gases at a later time (also with significant costs). This significantly increases the costs of investment while never yielding a fully satisfactory solution.

The above described problems have brought to the foreground an alternative to refuse incineration, namely, the gasification of waste materials producing synthesis gas. The two fundamental components of synthesis gas are CO, carbon monoxide, and H₂, hydrogen.

These are usually accompanied by carbon dioxide, CO₂. The ratio of the three components depends on the chemical composition of the material to be gasified, and on the technological process of gasification.
1. The fundamental process of gasification (wherein solid carbon is converted to gas) is the following:

| | |
|---|---|
| C + H₂O = CO + H₂ | endothermic |

2. The component that occurs most frequently in waste materials is cellulose (starch behaves in a completely identical way):

| | |
|---|---|
| CₙH₂ₙ₋₂0ₙ₋₁ + H₂O = n CO + (n+1) H₂ | endothermic, or |
| CₙH₂ₙ₋₂Oₙ₋₁ + n½ O₂ = n CO + (n-1) H₂ | endothermic |

3. Plastics undergoing heat decomposition generating benzene and its derivatives have a preferable exothermic gasification process:

| | |
|---|---|
| C₆H₆ + 3 O₂ = 6 CO + 3 H₂ | exothermic |
| C₆H₆ + 6 H₂O = 6 CO + 9 H₂ | exothermic |

4. The gasification process of hydrocarbons (oils, plastics such as PE, PP, etc.) is the following:

| | |
|---|---|
| CnH₂ₙ₊₂ + n H₂O = n CO + (2n+2) H₂ | endothermic |

The majority of gasification processes are therefore endothermic, which means that the heat required for the process has to be provided locally.

The document US 2011/0289845 A1 discloses a method for gasification of solid waste materials, but the disclosed technical solution has the significant disadvantage that the combustion energy of the fed-in (waste) material is complemented by electric energy, applying an induction furnace in the system as preferred/recommended. Another disadvantage of the solution is that the feed material is dried before being fed into the system, which is very energy-intensive and disallows the moisture content of the feed material from taking part in the processes. A further drawback is that the document does not provide a solution for removing the solid residues, i.e. ash/slag, or for reliable and economical separation of the components of the melt. The document does not address the purification of the synthesis gas either. A very significant problem is posed by the step of the known technical solution wherein air is expelled from the feed material by mechanically compressing the waste material assisted by evacuation. Compression does not allow for the application of the technical solution in such cases wherein gasification is performed without the introduction of external energy, through the partial combustion of the waste material applying gravity feed because the compressed feed material will not be gas-penetrable.

The document WO 2012/084135 A1 relates to the decomposition of a gaseous feedstock (hydrocarbon mixtures including methane). According to this document the feedstock does not contain any oxygen, oxygen is supplied for forming the carbon monoxide of the synthesis gas by water applied for reforming. The gaseous feedstock and product allow for heating the feedstock from outside in a heat exchanger. In this known technical solution the hot flue gas applied for heating has to be produced in a separate apparatus, its heat being transferred to the feedstock in a conventional heat exchanger.

In the document US 8,070,863 B2 an extremely heat-wasting synthesis gas purification solution is disclosed, which solution does not provide a concrete solution for efficient gasification or for efficient purification.

The document WO 2009/122225 A2 discloses an apparatus for producing synthesis gas which, however, does not provide a solution for expelling air from the feedstock prior to feeding it into the apparatus, and does not address the purification of synthesis gas either.

WO 2004/072210 A1 discloses a method and a plant for converting waste into hydrogen and other technical gases.

### 5 DESCRIPTION OF THE INVENTION

Our main objective motivating the invention was to provide an apparatus and method for producing synthesis gas that provides the air-free feedstock consistency that is required for gasification without mixing and can be operated without introducing external heat energy for the gasification, wherein the heat of the produced synthesis
10 gas can be efficiently utilized for energy generation, and wherein purifying the synthesis gas from haloids does not affect negatively the heat utilization of the synthesis gas. According to the invention it has been recognized that by expelling air from the feedstock utilizing flushing with CO₂, and by applying a specially configured reactor for gasification, which reactor is adapted for preferably recovering the heat of
15 the produced flue gases and synthesis gases already during the decomposition process, and in which reactor the produced synthesis gas is subjected to purification from haloids while keeping the temperature of the synthesis gas above 450 °C, the desired objectives can be achieved. To achieve as effective operation as possible, the batch - which expediently has a predetermined calorific value and is prepared
20 from solid waste materials of different calorific value - is expediently urged by gravity inside the longitudinal decomposition space of the reactor. In this case the solid residues, such as ash and slag, can also be removed from the decomposition space by means of gravity, while the wall of the decomposition space can be heated utilizing a so-called return flow space, allowing for gasification utilizing this additional heat.
25 The objectives specified above have been achieved by the apparatus according to claim 1 and the method according to claim 9. Preferred embodiments of the invention are defined in the dependent claims.

Preferred embodiments of the invention are described below by way of example with reference to the following drawings, where
Fig. 1 is a schematic illustration of an exemplary apparatus according to the invention upstream of (but including) the reactor,
Fig. 2 is the schematic diagram of an exemplary purification unit constituting the apparatus according to the invention, and
Fig. 3 is the schematic block diagram illustrating the steps of an embodiment of the method according to the invention.

The apparatus and method according to the invention are capable of processing a wide range of industrial and communal waste materials, converting them into energy or fuel with high efficiency. The gasifying reactor according to the invention is adapted for utilizing preprocessed waste material only. Inorganic components, especially metals, have to be removed from industrial waste (they can be recovered more efficiently applying alternative technical solutions). After communal waste is received at waste management sites, it is usually processed applying mechanical and biological waste treatment (MBWT) technology. This technology involves applying a "composting" process for decomposing fast-decaying components of the waste material under aerobic conditions, followed by subjecting the residue to crushing and removing inorganic components such as sand, stone, concrete, and metals. Our experiments motivating the invention have been carried out utilizing pre-treated waste material. The experiments have indicated that biological treatment (which essentially amounts to a type of composting - i.e. decomposing some of the organic content of the waste material without recovering energy from it) is not favourable from the aspect of gasification, and therefore this step is expediently omitted from the technological process according to the invention.

Depending on particle size of waste material, the calorific value of RDFs of different types of origin produced by MBWT systems is included in the table below.

| MBWT | Particle size (mm) | Calorific value (MJ/kg) |
|---|---|---|
| RDF | >150 | 21.07 |
| RDF | 100-150 | 22.87 |
| RDF | 75-100 | 20.00 |
| RDF | 50-75 | 14.25 |
| RDF | <50 | 8.65 |
| Stabilate (for deposition) | <40 | 5.46 |

Expediently, other waste materials, by way of example, plastic waste (PE, PP, PU, PVA and others, even low quantities of PVC) can also be utilized for the process. The measured calorific value of mixed hard plastic waste is 36.2 MJ/kg, with an ash content of 3.7%, i.e. it is an excellent energy source, but it is difficult to process it in itself. Preferably, it can be mixed with lower-quality RDF, allowing for utilizing fractions with low calorific value.

It is proposed that the feedstock of the gasification process be generally classified into four categories (the number of categories can of course be different (from these)):

| Waste material category | Calorific value (MJ/kg) | Note |
|---|---|---|
| 1) RDF | 10-14 | usually high moisture content |
| 2) "Super" RDF | 14-18 | |
| 3) Agricultulral byproducts (cellulose- or starch-based), wood waste or scrap | 14-25 | low moisture content, balanced C-, H-, and O-content |
| 4) Hydrocarbons, plastics (PE, PP PUR, etc.) vegetable or mineral oils, etc. | 20-35 | low moisture content, O deficit |

Provided that mechanical preprocessing was successful, the ash content of the feedstock is typically between 5-15%. Applying the technology, only this part of the waste material, i.e. 5-15% has to be disposed of in a landfill, in case due to some special contamination the slag produced by the gasification process is not suitable for other purposes (i.e. road construction). Volume reduction is even more significant: the ash/slag to be deposited is only 2-3% in volume of the collected waste material. In case the feedstock has been appropriately cleaned of metals (applying by way of example, magnetic and eddy-current separators), the ash (as an inert waste material) can be utilized for example for road construction instead of depositing it in a landfill.

In an exemplary embodiment of the invention, therefore, materials falling into the above listed four categories are mixed in a computer-controlled manner, feeding them out from four buffer storage tanks.

The waste material processing solution according to the invention can also utilize the following groups of waste material as feedstock: plastic waste materials, residues mechanically separated during waste paper or cardboard fibre suspension production, waste material originating from sorting paper or cardboard, binding and preparation waste materials, processed textile fibre waste materials, paper and cardboard packaging waste materials, plastic packaging waste materials, waste materials from wooden packaging, mixed composite packaging waste materials, other mixed packaging waste materials, textile packaging waste materials, absorbents, filtering materials, wiping cloths, protective clothing, other clothing, fabrics, wood.

According to the invention we have recognized that dioxins occur in the cooling synthesis gas at temperatures under 500 °C, with a really significant amount thereof being produced under 450 °C. The decomposition reactor is so dimensioned that decomposition can be carried out at as high a temperature as possible, but the temperature of the discharged gases is not overly high but is still safely above 450 °C, preferably above 500 °C. If a material that is very difficult to gasify is processed in the reactor, a higher temperature is set and maintained in the reactor, and thus also the flue gases can be hotter than 500 °C. In such a case the gases can be cooled to 500 °C in a heat exchanger that can also be utilized for steam generation allowing for reaction heat recovery. Gases are, however, not cooled further below 450-500 °C, but haloids (halogens, halogen compounds and derivatives, hydrogen haloids) are removed therefrom.

In the course of our experiments we have recognized that by maintaining an oxygen content of below 0.1% in the decomposition space a predominantly reducing environment can be provided. Thus, hydrochloric acid-induced corrosion of the apparatus will not have to be taken into account upstream of the system adapted for removing haloids, only after cooling below the dew point. However, by that time haloids have already been removed by performing the steps that are described in detail below.

For removing hydrogen haloids, usually powder-form basic materials (e.g. Na₂CO₃ or NaHCO₃) are applied. In contrast to that, in the technological solution according to an embodiment of the invention we suggest the application of ground dolomite and/or limestone.

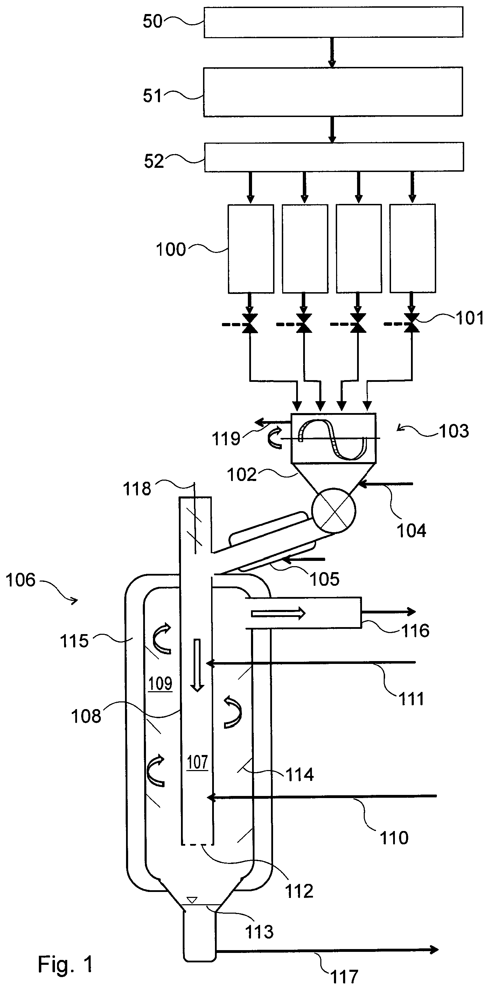

The portion of the exemplary apparatus shown in Fig. 1 illustrates the part of technological solution situated upstream of the gasifying reactor. Solid waste material is fed into a crushing unit 50; crushing being a required step of energy-efficient waste material recycling. A waste removal unit 51 is preferably applied for removing non-gasifiable materials (metals, stone, sand, brick, glass, clay) from the crushed waste material. This is followed by sorting, based on calorific value, the crushed waste material into buffer storage tanks 100 utilizing a sorting unit 52.

We have recognized that the decomposition process according to the invention requires that the feedstock have an appropriate consistency. Expediently, the sufficiently crushed feedstock is classified into three base groups based on the calorific value (or carbon content) of the material. Mixing the materials from these groups, a feedstock of the desired calorific value can be provided. It is also recommended to apply a fourth group comprising materials that are not sufficiently solid (i.e. are paste or sludge-like). However, materials in this group can be added to the mixture prepared from the base groups only in amounts that do not result in the agglomeration of the solid particles, i.e. the batch remains gas-penetrable.

According to our research, feedstock is not subjected to drying. The water reagent required for the gasification reaction is provided by water fed to the reactor together with the waste material. If the water content of the feedstock is insufficient, additional water is fed into the reactor (in the form of steam) for making decomposition as complete as possible.

To prepare a batch having the desired calorific value, expediently computer-controlled batch feeders 101 connected to each of the buffer storage tanks 100 are utilized for discharging material from the buffer storage tanks 100. The batch is expediently fed into a stirring unit 103.

The size of the batch is expediently chosen to provide an operating time of 1-60 minutes, preferably approximately 5 minutes conforming to the capacity of the reactor.

The prepared batch is stirred utilizing the stirring unit 103 so as to provide a feedstock of an even calorific-value for gasification. The stirring unit 103 is preferably implemented as a strip stirrer, Z stirrer, or screw stirrer, and has an enclosable spatial region. It preferably has a cylindrical shape in order to minimize carbon dioxide consumption during denitrogenation. A CO₂ gas inlet 104 is connected to the enclosable region, the gas fed through the inlet being applied for expelling air from the batch. Expelled air is discharged through an air outlet 119 arranged above the CO₂ gas inlet 104. This is a very significant improvement over the state of the art, because air expelling (flushing) can also be performed during stirring, which allows for removing N₂ gas from the waste material with increased effectiveness, and also maintains the feedstock in uncompressed state. Alternatively, air can be expelled not only in the stirring unit 103 but also in an enclosable region separate therefrom. The nitrogen-free feedstock batches are fed into the reactor through a chute 102, expediently applying a drum feeder.

After feeding it into the reactor, the waste material is expediently pre-heated applying a pre-heater 105 utilizing heat retrieved by way of example from gases generated in the decomposition space of the reactor. Feedstock is fed into the reactor preferably in an intermittent manner, with a regular cycle time.

The main problem related to methods for producing synthesis gas is that the gasification of organic materials has high energy demand. The required energy is supplied in most known technical solutions by burning separately added fuel. In the technical solution according to the invention, the required heat is provided by partial combustion of the solid waste material functioning as feedstock.

Another problem to be addressed in relation to our technological solution was how to transfer heat to the feedstock, i.e. how to heat it to a few hundred °C, or possibly to a thousand °C. Known solutions are either very expensive, utilizing, by way of example, electric current for heating, or apply some kind of inert heat transfer substance, e.g. sand. By way of our invention we have recognized that the feedstock can be heated by the heat of combustion to the desired temperature also through an appropriately configured heat transfer surface if the required heat transfer time is provided. It also has to be provided for that the batch to be heated should not be too wide so that - utilizing the heat radiation of the walls applied for heat transfer - the walls can be near enough to every part and particle of the material. This solution makes stirring the material inside the reactor unnecessary. According to the invention a solution has also been provided for preventing the feedstock from coming into direct contact with the flue gases.

According to the invention, the produced heat is redirected to the decomposition space of the reactor, where the heat demand of the decomposition reactions is fulfilled by way of a heat transfer surface, implementing heat transfer without component transfer.
1. the primary combustion process in the decomposition space

| | |
|---|---|
| C + O₂ = CO₂ | exothermic |

2. other combustion processes carried out in the decomposition space:

| | |
|---|---|
| 2 CO + O₂ = 2 CO₂ | exothermic |
| 2 H₂ + O₂= 2 H₂O | exothermic |

Expediently, a monoblock, single-space reactor is applied, which means that the gasification and partial oxidation of the feedstock occurs in the same reactor space. The reactor preferably constitutes a strongly heat-insulated unit that comprises at least one feedstock introduction system, a feedstock holder tube, wherein the feedstock is partially combusted with oxygen, and one or more oxygen inlets (by way of example, four oxygen inlets), a steam inlet, an ash and/or slag removal system including a grate (which can be either cooled or uncooled, preferably implemented as a moving grate, but it can also be stationary), and, preferably, deflector members for deflecting raw synthesis gas that are adapted for facilitating heat exchange between the synthesis gas and the wall of the tube holding the feedstock.

The reactor 106 shown in Fig. 1 comprises a longitudinal decomposition space 107 adapted for receiving the stirred batch that was previously flushed with CO₂ gas. A return flow space 109 that is in fluid flow connection with the decomposition space 107 at the bottom outlet end of the decomposition space 107, and at least partially encompasses the wall 108 of the decomposition space 107 along the length of the decomposition space 107, is also arranged inside the reactor 106.

The heat required for gasification is generated by partially combusting the feedstock advancing in the decomposition space 107, the oxygen required for the process being introduced through an O₂ gas inlet 110. Oxygen is introduced to the reactor by way of one to four blow-in nozzle units extending into the bottom portion of the decomposition space 107. The gas flow of the blow-in nozzles can be separately adjusted, thereby it is possible to adjust the operating parameters of the reactor (e.g. reactor temperature, gas composition) to optimally match the (composition of) the feedstock under decomposition at the given time. The suggested configuration is crucial for the flexible operation of the reactor because it is required for adjusting the operating parameters to match the inevitably variable composition of the waste material. In such a way the part of the inside space having a temperature over 850 °C can be increased inside in the decomposition space 107 and the return flow space 109, which increases the heat transfer time to 2 seconds, providing the time required for decomposing all feedstock components and minimizing the presence of toxic components in the resulting synthesis gas.

The oxygen gas introduced to the reactor for gasification can optionally contain maximum 2% of air or 5% of an inert gas that is added thereto in a continuous fashion. If necessary, water is introduced into the decomposition space 107 by way of a water inlet 111, preferably in the form of steam. Under the effect of heat, steam is generated from the moisture content of the feedstock in the reactor, the generated steam assisting right away the decomposition of the downward-advancing feedstock of an ever increasing temperature. Adding water is required for producing the H₂ content of the synthesis gas, and it also allows for controlling the temperature of the decomposition space 107.

In the illustrated example the decomposition space 107 is formed by a vertical profiled pipe that can have an arbitrary cross sectional shape and has and outlet end at the bottom. The return flow space 109 is located between the inside wall of an insulated vertical tank arranged about the vertical profiled pipe and the profiled pipe, with the vertical profiled pipe extending into the vertical tank from above, and with a synthesis gas outlet 116 being formed at the upper closed end of the tank that encompasses the vertical profiled pipe. The tank can also have an arbitrary cross-sectional shape.

The flue gases and the synthesis gas generated in the decomposition space 107 are removed from the decomposition space 107 in a direction identical to the flow direction of the feedstock, followed by generating, in the return flow space 109, a flow of said gases in a direction opposite the flow direction of the feedstock, the heat carried by the gases being applied for heating the decomposition space 107 through the wall 108 thereof. The feedstock is thus heated and decomposed through gasification. A unit preferably situated outside the reactor 106, by way of example a rotary exhaust fan, is applied for generating the gas flow. The synthesis gas is preferably sucked through the apparatus applying a Roots blower, or any other low-pressure machine capable of carrying high gas flow rates. Being mixed with the generated flue gases (which latter do not contain any harmful NOx due to the initial air-expelling step), the synthesis gas is expediently moved slowly upwards in the return flow space 109. During the purification process the temperature of the synthesis gas is kept above 450 °C, preferably above 500 °C; in case the synthesis gas has excess heat relative to this temperature (the temperature of the gas leaving the reactor is higher than 500 °C), then, in a unique manner, this heat can be utilized, even prior to purification, for energy generation applying a steam-generating heat exchanger. Choosing an appropriate heat transfer time in the reactor allows for producing low-tar, dust-free final gases.

The reactor 106 is expediently controlled based on the composition of the gases discharged therefrom, so that the synthesis gas content of the final gas is maximized. Reaction temperature is set by adjusting the flow rate of the feedstock and the gases in the reactor. The reactor is preferably operated at a pressure of 200 - 4000 mPa and at a temperature of 500 - 1100 °C.

To allow for easier heat exchange between the synthesis gas and the wall 108 of the decomposition space 107, deflector members 114 are preferably arranged in the return flow space 109. The deflector members 114 are also adapted for retaining flue ash and slag. The reactor 106 preferably comprises thermal insulation 115 encompassing the return flow space 109.

Successive chemical reactions take place at different spatial locations inside the reactor 106. For the sake of stable operation, a stationary state is maintained in the reactor, that is, thanks to the even flow conditions, the successive reactions take place always at the same respective location of the reactor, precisely at the respective locations that were established when designing the reactor. The feedstock fed in the system and the hot flue gases/synthesis gas advance in opposite directions (in a counter-flow manner), but, being separated by the pipe walls, there is no cross-flow between the two. The arrangement according to our invention, providing in part unidirectional flow and in part counter-flow allows that the feedstock can be decomposed completely, as it is the "residue" portion of the feedstock (which is the hardest to decompose) that encounters the hottest portion of the synthesis gas. In order to maximize heat utilization, the reactor can be configured such that the hot gases encompass the feedstock undergoing continuous decomposition. To achieve that, a pipe-in-pipe or a pipe bundle-in-pipe configuration is applied. The volume of the reactor 106 can be, by way of example, between 0.05 m³ and 10 m³, the diameter/height ratio being adjusted to the flow rate.

The appropriate dimensioning and geometrical configuration of the return flow space 109 may facilitate the retention of fine-grade ash and slag particles. This functionality is also assisted by the deflector members 114.

The reactor 106 may comprise more than one longitudinal decomposition spaces 107 that can have a common return flow space 109 or separate return flow spaces 109. If the longitudinal decomposition spaces formed of profiled pipes are vertical, the feedstock advances from the top towards the bottom urged by gravity. If the reactor and the pipes have a non-vertical (i.e. inclined) axis, or are arranged horizontally, then the feedstock is urged forward by suitable means, by way example preferably by rotating the reactor, applying a rotary screw, or even a scraper device. The pipes situated inside the reactor are made of a material that withstands even temperatures around 1200 °C, but at the same time has good heat-transfer characteristics; thereby ensuring that the feedstock is heated to the required temperature and undergoes decomposition to the foreseen extent. Assuming partial oxidation and complete decomposition, CO₂, CO, and H₂ gases are generated in the reactor.

At the bottom outlet end of the longitudinal decomposition space 107 there is arranged a stationary or movable grate 112 that is adapted for the temporary retention of the not-yet-gasified material, with a water trap 113 adapted for receiving dropping solid combustion products (ash, slag, or their melts). The water trap 113 is adapted for providing the gas-tightness of the reactor, as well as for cooling the byproducts (ash and/or slag). The solid combustion products are removed from the water trap via a combustion products outlet 117 known per se. If necessary, the slag is scraped from the bottom of the reactor 106 applying an appropriate scraper device. The desired physical characteristics of the ash or slag can be set by additives.

If the pre-heater 105 is arranged at an angle with respect to the vertical axis of the reactor, then it is possible to install a vertical scraper device 118 inside the decomposition space 107, which device allows for mechanical intervention in the event of a partial or total occlusion without cooling the reactor. The scraper device 118 is configured in a way that during scraping it does not touch the steam or oxygen inlet nozzles.

Raw synthesis gas is continuously removed from the continuous-operation reactor 106. This gas is not yet suitable for further processing as hazardous substances may form from it during recombination reactions occurring during cooling. These substances predominantly include dioxins and furans, which can possibly form if the temperature of the gas mixture falls below 450 °C. To provide efficient energy use we have recognized that the raw gases should not be subjected to cooling immediately, and it is especially undesirable to wash them with water, because that way the gases will lose much of their energy, while operating the coolers involves extra costs. The apparatus according to the invention comprises a hot gas purifier unit (heterogeneous reactor) adapted for binding the atomic, molecular or hydrogen haloids applying suitable reagents, preferably inorganic alkaline minerals, by way of example limestone or dolomite.

The synthesis gas discharged from the return flow space 109 is subjected to purification from haloids applying a purification unit, keeping, for the above reasons, the temperature of the synthesis gas above 450 °C in the course of the purification process.

In the method according to the invention the usual adsorbents or absorbents are not utilized for purifying the synthesis gas of haloids, because according to the invention for purification the synthesis gas has to be kept at a temperature above 450 °C, at which temperature these solutions do not work. According to the invention such a sorbent material is utilized that is capable of not only physically binding the haloids to its surface but also of reacting therewith, as a result of which the haloids can be removed very effectively. We had to select such sorbent materials which rapidly react with the haloids, and which provide that the new compounds generated from the reaction are also solid at the high temperatures applied. According to an embodiment of the invention it has been found that limestone or dolomite are perfect sorbent materials for the purposes of the invention.

The purification reactors utilized in a preferred embodiment of the invention is adapted to let through the gas while the sorbent material and the bound materials are in the solid state. Limestone and/or dolomite crushed to a particle size of 1-2 mm provide high sorbent surface area that allows the binding reaction to progress quickly.

Being continuously or intermittently discharged from the reactors, the CaCl₂ generated from the dehalogenization reaction can be treated easily as it can be washed off with water. CaCl₂ solved by water is a precious substance that can be utilized, by way of example, for the de-icing of roads, and can be easily separated from the limestone or dolomite.

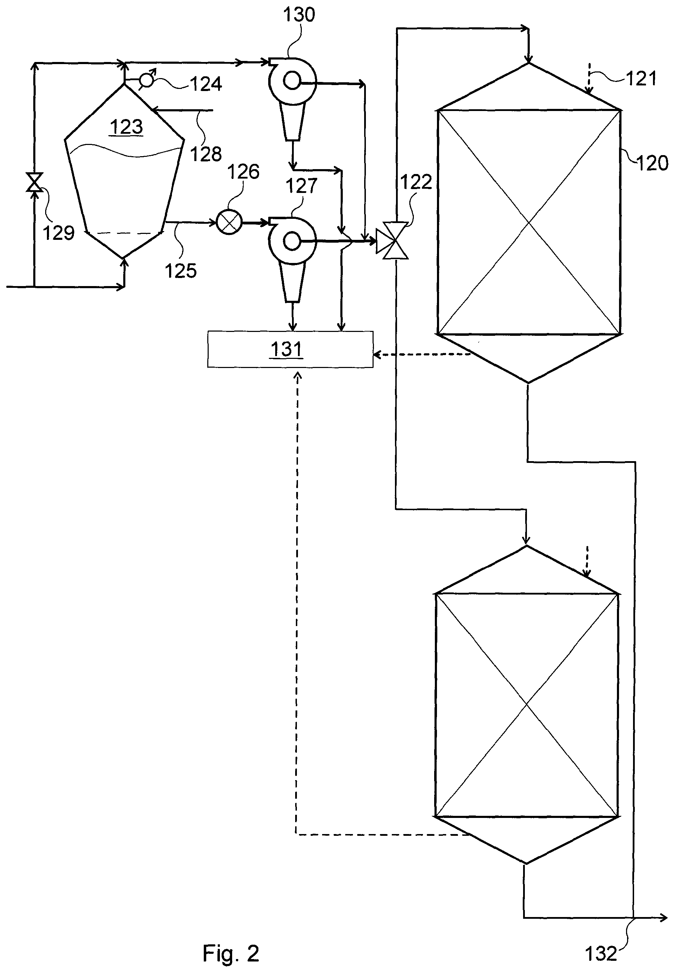

A preferred embodiment of the purification unit can be seen in Fig. 2. Preferably, a fixed-bed purification reactor 120 containing limestone and/or dolomite particles applied as sorbent material is utilized for purifying the synthesis gas. Applying this technical solution, the concentration of haloids can be reduced below 5 ppm. The system comprises two fixed-bed purification reactors 120 that can be alternately switched on expediently by a three-way valve 122. Utilizing the reactors in an alternating fashion allows that the sorbent material in the out-of-operation purification reactor can be regenerated by washing it over with water. The fixed-bed purification reactor(s) 120 preferably has (have) a tower-like configuration, with the sorbent material being arranged on perforated holder trays along the height of the tower, the synthesis gas being introduced into the tower at the top and discharged therefrom at the bottom, and with a water inlet 121 adapted to allow the sorbent material to be washed over with water for regeneration being arranged at the top of the tower.

The fixed-bed system is controlled based on a "switching concentration" value, in a parallel manner, the calcium haloids formed in the system being solved by water injected applying sprinklers after sufficient cooling. Dolomite can be replenished, for example, in an intermittent manner.

The haloid concentration of the gases leaving the towers at the bottom, downstream of the fixed-bed purification reactors 120, can be measured continuously, preferably in the conduit adapted to carry off the purified synthesis gas 132. Upon detecting the presence of haloids, the gas flow can be stopped, and, to regenerate the sorbent material, the operation of the given tower can be halted, the tower can be cooled off (or left to cool), followed by washing it over with water. If necessary, the tower can also be filled up with fresh sorbent material to replace sorbent material that has been washed off. The above described regeneration process can be carried out relatively quickly, i.e. the time required for regeneration is shorter than the efficient operating period of the other tower. If the halogen content is relatively low, the towers can also be regenerated in a cyclical fashion, based on a predetermined regeneration cycle time rather than based on measurements. In such a case the operation of the particular tower can be halted, and, after leaving it to cool off a little, it can be washed with water, which causes the CaCl₂ to be solved, while the sorbent material remains inside the tower. The sorbent material that may be washed off can be replaced by fresh material.

According to the invention, the synthesis gas purified from haloids will have a temperature of at least 450 °C, so the above indicated adverse effects can be prevented, while the gas can still be utilized for energy generation.

If the reactor is located in a very sensitive environment, i.e. the local regulations regarding the pollutant content of the final gas are very strict, then a two-stage process for removing hydrochloric acid and haloids is applied. In such a case, the first stage of the process for removing haloids is carried out in a fluid bed reactor where fast reaction speeds can be provided. As with the above solutions, the reaction products are separated in the reactors containing the solid sorbent material.

Removing halogens is a reaction between solid and gas-phase reagents, so it is very important to ensure that the gas is brought into contact with the solid surface as soon as possible. This condition can be best fulfilled applying fluid-bed reactors. The fluid-bed reactor is dimensioned to allow the gas flow to be slowed down to such an extent that the finely crushed solid reagent (limestone or dolomite) remains floating. The gas flow in such a reactor is preferably heavily turbulent, and the solid material is kept mixing continuously. This ensures that the gas-phase and solid-phase reagents are brought into contact surely and effectively. The gas is retained in the fluid-bed reactors only for a short time, and yet the efficiency of the reaction affecting halogens and hydrogen haloids is very high, so the gas can retain its heat content.

However, the turbulent flow conditions prevalent in the fluid-bed reactor cannot ensure that the gas is completely pure, because there is a chance that some of the gas entering the reactor can immediately pass to the outlet port. Applying appropriate reactor configurations and flow control regimes (for controlling the bypass valve) the probability of non-reacted gases leaving the reactor can be reduced, but cannot be eliminated.

Since the gas leaving the reactor can still contain halogens, it is expediently fed into a fixed-bed purification reactor 120 that has a volume 2.5-10 times the volume of the fluid-bed reactor. In this large space the gas loses much of its velocity, having an almost laminar flow through the appropriately arranged filling material, without recirculation (i.e. it has a plug flow). Here the residual halogens are also bound, resulting in a completely purified, halogen-free synthesis gas that can now be cooled off (i.e. its heat content can be utilized) without producing dioxins.

If so required, therefore, a fluid-bed purification reactor 123 (shown in Fig. 2), can be introduced in the flow path of the synthesis gas upstream of the fixed-bed purification reactor(s) 120, which fluid-bed purification reactor may also comprise limestone and/or dolomite particles as sorbent material. A measurement device 124 adapted for measuring the haloid content of the synthesis gas discharged from fluid-bed purification reactor 123 is preferably connected to the synthesis gas flow space. An outlet 125 adapted for discharging spent sorbent material from the fluid-bed purification reactor 123 is connected to the bottom portion of the fluid-bed purification reactor 123, the outlet 125 being connected to a first dust separator 127 via a material forwarding device 126. An inlet 128 adapted for replenishing the fluid-bed purification reactor 123 with fresh sorbent material is connected to the upper portion of the fluid-bed purification reactor 123.

Providing an expedient configuration of the fluid-bed reactor the flow of the gas can be slowed down at the top of the reactor, resulting in the solid sorbent material "dropping down" from the slowly flowing gas and remaining in the reactor, i.e. it does not put a load on the dust separator. The fluid-bed purification reactor 123 is therefore preferably configured in a way that the internal space thereof expands from the bottom to the top, so the gas flowing inside it will slow down near the top. The synthesis gas leaving the reactor will still contain sorbent material in the form of dust or small particles, which are expediently recovered applying dust separators 127, 130 (cyclones).

Upon detecting an increase of haloid content, spent sorbent material is removed from the fluid-bed purification reactor 123 through the first dust separator 127, followed by replenishing the fluid-bed purification reactor 123 with the necessary quantity of fresh sorbent material. The sorbent material - expediently limestone and/or dolomite crushed to an average particle diameter of preferably 1-2 mm, particularly preferably approximately 2 mm - can be carefully fed to the reactor through the inlet 128, expediently applying a screw feeder. In higher-capacity systems it is possible to apply particles having a particle size of a diameter of even 5 mm.

The fluid-bed purification reactor 123 operates optimally if the gas flow therein is turbulent. To provide optimal performance, a bypass valve 129 can be applied for controlling the gas flow.

Due to a chemical reaction occurring at an operating temperature of 500 °C, calcium chloride is produced in the granules of the fluid bed, so according to our experiments, in a fluid bed with a volume of 3 m³ and filled with powder to 50% about 5 g/m³ of hydrogen haloids can be bound. The hydrogen haloid residues are removed applying the fixed-bed purification reactors 120 that are preferably filled with dolomite to 70% of their volume (their free volume is by way of example 3 m³).

If the waste material contains low amounts of halogens and halogen derivatives, then it is not necessary to apply fluid-bed purification for removing halogens.

The synthesis gas leaving the fluid-bed purification reactor 123 is preferably passed through a second dust separator 130, introducing the synthesis gas to the fixed-bed purification reactors 120 from both dust separators 127, 130. The solid material is conveyed from the dust separators 127, 130 into a storage tank 131, with the solid sorbent material originating from the fixed-bed purification reactors 120 being also deposited here.

Following purification, steam can be generated by passing the synthesis gas through a heat exchanger; the steam can be utilized for energy generation with the help of a steam turbine, for example, while the water condensing from the cooled-down synthesis gas (or tar-containing water) can be reintroduced - preferably in the form of steam - into the decomposition space 107 of the reactor 106. With a carefully designed operating regime no waste is produced here as all the water can be recycled into the reactor.

Such a heat recovery process can only be carried out applying synthesis gas purified from haloids, primarily of chlorine and fluorine; in other cases the synthesis gas has to be cooled down quickly in order to reduce the chance of dioxin recombination. However, as it has been proven many times over, cooling does not ensure that the gases are completely free from dioxins, so in this case a costly purification process (dioxin scrubbing) would be needed for the synthesis gas.

The purification reactors according to the illustrated embodiments expediently comprise external insulation so that the temperature of the synthesis gas inside them can be maintained. Thereby the purified gases do not lose their heat energy and so they are suited for generating significant amounts of energy. Haloid-free gases can be cooled off, without there being a danger of dioxin formation (recombination), to the temperature range where a large amount of very dangerous and difficult-to-remove dioxins would inevitably form in the presence of haloids.

The technical solution may further comprise a heat recovery apparatus adapted for recovering the residual heat of the synthesis gas based on the principle of the Organic Rankine Cycle, an adsorber device adapted for binding the sulphur content and/or the sulphur-containing compounds of the synthesis gas (operated by way of example applying an organic solvent, or an inorganic sulphur sorbent medium, preferably iron III hydroxide), and/or a separator adapted for separating the CO₂ content of the synthesis gas applying potassium carbonate sorbent material. The CO₂ separated applying the latter can be preferably utilized for the air-expelling step at the beginning of the process. The CO₂ separator can preferably be implemented as two parallelly connected towers comprising potassium carbonate as sorbent material. This solution not only facilitates further utilization of the synthesis gas, but also allows for producing pure carbon dioxide that can be sold easily at good prices, and can significantly improve the rate of return on the investment of the project.

During the halogen removal process the gas flow is maintained expediently by a gas blower situated downstream of the heat recovery device, i.e. gas extraction from the system is maintained.

Solid materials are fed into and removed from the system in an intermittent manner, applying an apparatus adapted for feeding powder-form materials (e.g. screw feeder). The gas-tightness of the system is ensured applying drum shutters arranged by way of example downstream of the cyclones.

Our experiments indicated that in case the total halogen (primarily chlorine and fluorine) content of the feedstock is higher than 0.5%, it is advisable to introduce a fluid-bed halogen removal step. With halogen contents lower than that it is usually sufficient to install the dual-tower fixed-bed system. If the waste material has components requiring very high gasification temperatures, then it is expedient to install the fluid-bed system even in the case of lower halogen contents. As a general rule of thumb it can be stated that below a halogen content of 0.1% it is always sufficient to apply the system comprising dual fluid-beds.

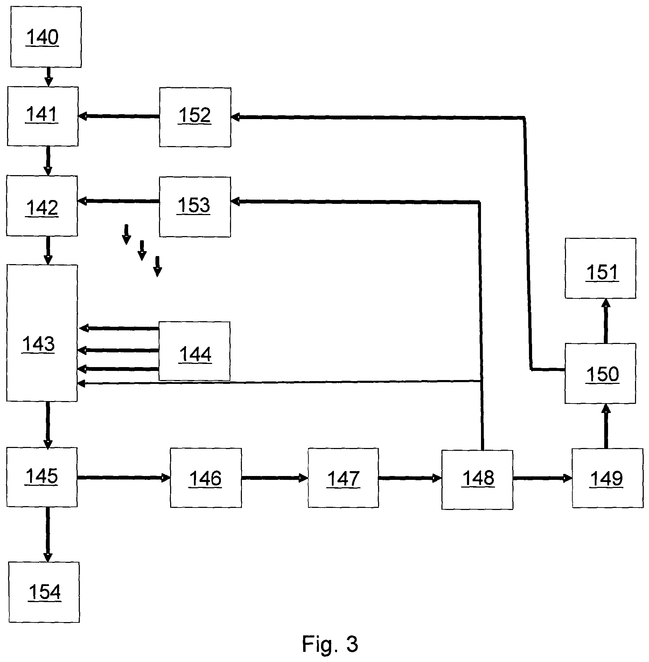

In the course of the exemplary method illustrated in Fig. 3, in operational step 140 crushed solid waste is stirred so that the obtained uniform consistence facilitates uniform gasification of the material that is moving inside the reactor expediently without subjecting it to any mechanical actions.

In the operational step 141, air is expelled from the feedstock. This does not imply that the feedstock batch is compressed, as the compression of crushed waste material deteriorates gas-penetrability, so gasification without active material displacement inside the decomposition space cannot be implemented. In this operational step, expelling air, and particularly N₂ gas, is implemented applying flushing with CO₂ gas, thereby preventing the production of harmful substances during gasification. In operational step 142 the batch can be pre-heated, with further stirring being optionally applied during pre-heating.

Gasification is carried out in operational step 143, meanwhile introducing oxygen into the decomposition space 107 in operational step 144. In operational step 145 the combustion residues, i.e. slag and ash, are separated, followed by performing purification of the hot synthesis gas from haloids in operational step 146. In operational step 147 the heat of the synthesis gas is utilized for generating steam, i.e. for energy generation. As demonstrated above, the temperature reduction occurring during this step does not result in the production of harmful substances.

In operational step 148 the condensate is separated from the cooling synthesis gas, preferably followed by the desulphurization of the synthesis gas in operational step 149. In the next step 150 the CO₂ content of the synthesis gas is preferably extracted, followed by carrying off the now completely purified synthesis gas for further utilization in operational step 151. In operational step 152 the CO₂ gas produced in operational step 150 is partially utilized for carrying out operational step 141. Likewise, the condensate produced in operational step 148 can be introduced to the preheater in operational step 153 for performing operational step 142, or it can also be utilized for gasification. In operational step 154 the slag and ash are removed in a manner known per se, i.e. through a water trap.

### EXAMPLE

An experimental reactor was produced according to the invention. The reactor was made of heat-resistant steel, with a vertical pipe-in-pipe arrangement. The volume of the decomposition space was approximately 25 litres, with the volume of the return flow space being approximately 300 litres. The outside wall of the reactor was fitted with a 15-cm thermal insulation and the required explosion protection features.

The feedstock was moving from the top of the decomposition space towards the bottom, while it was heated to decomposition through the wall of the decomposition space. Non-decomposed fractions advanced further downwards together with the generated gases. Residual feedstock was combusted at the bottom of the decomposition space applying oxygen injection, thereby heating the gas products. In the bottom third of the decomposition space the temperature of the reactor reached 950-1000 °C. Solid residue (ash) was temporarily retained utilizing a stationary grate arranged at the bottom of the decomposition space, followed by gathering it in a water-filled vessel placed under the stationary grate.

Three types of waste material were applied as feedstock:
- 40% of RDF with a particle size of 50-75 mm, with a calorific value of 22.87 MJ/kg,
- 50% of RDF with a particle size of 100-150 mm, with a calorific value of 14.25 MJ/kg,
- 10% of communal sewage sludge having a moisture content of 20% and a calorific value of 4 MJ/kg.

The mixed feedstock was crushed in a crusher to a particle size of under 20 mm, followed by feeding it into the reactor in batches of 5 kg (after removing metals). Air was expelled from the batches utilizing CO₂. A total of 100 kg of waste material mixture was fed into the system each hour.

The applied oxygen flow rate was 25 kg/h. 2-5 kg/h of steam was utilized for temperature control.

The temperature at the outlet towards the fixed-bed dehalogenization device was 520-540 °C. For binding halogens - in our case, hydrochloric acid - an upright filled column with a volume of 5 m³ was applied. The column was filled with limestone crushed to a particle size of 2 mm. After dehalogenization and cooling to 300 K, the flow rate of the gas obtained as a product was 120 m³/h.

In the course of the process the flow rates of the synthesis gas, oxygen and steam were measured continuously, with temperatures also being monitored in the reactor and at appropriate locations of the purification apparatus. Approximately 0.1 kg of hydrochloric acid was bound from the gas every hour. The composition of the synthesis gas being produced was also measured from time to time with a suitable gas analyzer device.

The measured composition of the gas product (before condensing the steam) was the following:

| | |
|---|---|
| Hydrogen | 34.9 v/v% |
| Carbon dioxide | 16.6 v/v% |
| Carbon monoxide | 34.8 v/v% |
| Steam | 13.7 v/v% |

Hydrogen sulphide, which was present in trace amounts, can be removed applying additional known methods. The system was kept under an extraction pressure of approximately 1 kPa.

The major advantages of the technology according to the invention are the following.
- Introduction of external heat energy is not required for processing the solid feedstock. Heat is produced by partial combustion of the feedstock, carried out in the same spatial region where decomposition of the feedstock takes place. The apparatus has a single space, i.e. there are no shutter devices included therein, the feedstock and the combustion products are prevented from mixing solely by the geometrical configuration of the apparatus. Combustion heat is transferred to the solid feedstock inside the apparatus through an appropriately configured and dimensioned wall. Since solid materials do not mix and cannot be mixed in the same way as gases do, heat transfer is difficult; it has to be ensured that all particles of the solid material are in contact with the wall heated up by the hot flue gases. This is also ensured by providing a compression-free consistency of the feedstock.
- The reactor space configuration according to the invention is basically not for enabling that solid dust or ashes enter the flue gases. It is thus possible to immediately feed the hot gases leaving the reactor into columns containing solid sorbent material, where halogens and hydrohaloid compounds are removed from the gases. The gases do not get cooled during this process, i.e. the significant heat content of the high-temperature raw synthesis gas is preserved.
- The gas purified from halogens and halogen derivatives can already be utilized for generating steam (high-pressure recuperator steam), from which expediently electricity can be generated immediately. As the halogen derivatives (acids) have been removed from the gas, the steam generator is not in a danger of corrosion resulting from contacting them, so no special acid-resistant structural materials are required for the apparatus (the heat exchanger of regular boilers is suitable).
- Applying the sequence we suggest, dehalogenized gases can be cooled off significantly already in the recuperator, even to 200 °C, because, on the one hand, no acid-induced corrosion (caused primarily by hydrochloric acid) is to be expected, and, even more importantly, there is no danger of dioxins being produced because in the absence of halogens dioxins cannot form. Accordingly, a significantly larger fraction of the heat content of the gas can be utilized for generating steam (and therefore, electricity).
- The limestone and/or dolomite expediently applied according to the invention surpasses, in more than one respect, soda or sodium carbonate applied in conventional technical solutions. First of all, the adsorbents applied according to the invention are very cheap, so they can be utilized in significant quantities, targeting even complete dehalogenization because no significant costs are incurred by throwing out adsorbent that has barely reacted with halogens and replacing it with fresh material.
- Another advantage of these materials is that they can be arranged inside the tower in such a manner that gases can easily penetrate them, the arrangement having a low flow resistance even when some of the material (typically near the surface) has already reacted with the hydrochloric acid. Low flow resistance is an important consideration for dimensioning the apparatus, but it affects even the flow conditions forming inside the decomposition reactor. This is the only way to ensure a recirculation-free "plug flow" of the gas inside the reactor. Dolomite or limestone can be regenerated easily (washing it over with water), or can be deposited in a risk-free manner as it is not an environmental pollutant.

The invention is, of course, not limited to the preferred embodiments described in details above, but further variants and developments are possible within the scope of protection determined by the claims.

### LIST OF REFERENCE SIGNS

- 50: crushing unit
- 51: waste removal unit
- 52: sorting unit
- 100: buffer storage tanks
- 101: batch feeders
- 102: chute
- 103: stirring unit
- 104: CO₂ gas inlet
- 105: pre-heater
- 106: reactor
- 107: decomposition space
- 108: wall
- 109: return flow space
- 110: O₂ gas inlet
- 111: water inlet
- 112: grate
- 113: water trap
- 114: deflector members
- 115: thermal insulation
- 116: synthesis gas outlet
- 117: combustion products outlet
- 118: scraper device
- 119: air outlet
- 120: fixed-bed purification reactor
- 121: water inlet
- 122: three-way valve
- 123: fluid-bed purification reactor
- 124: (haloid content) measurement device
- 125: outlet
- 126: material forwarding device
- 127: (first) dust separator
- 128: inlet
- 129: bypass valve
- 130: (second) dust separator
- 131: storage tank
- 132: conduit
- 140-154: operational steps

## Claims

1. An apparatus producing synthesis gas, comprising
- a stirring unit (103) adapted for stirring a batch of waste material,
- an enclosable region and a CO₂ gas inlet (104) that is connected to the enclosable region and is adapted to allow for flushing the batch with CO₂ in order to expel air therefrom,
- a reactor (106) comprising a longitudinal decomposition space (107) adapted for receiving the batch that has been stirred and flushed with CO₂ gas,
- an O₂ gas inlet (110) connected to the decomposition space,
- a water inlet (111) connected to the decomposition space (107),
- a flow generator unit adapted for discharging from the decomposition space (107) the flue gases and the synthesis gas generated in the decomposition space (107), and
- a purification unit,
**characterized in that**
- the decomposition space (107) of the reactor (106) is formed by a profiled pipe, and the reactor (106) further comprises an insulated tank arranged about the profiled pipe, wherein the profiled pipe extends into the insulated tank, and wherein a return flow space (109) is located between an inside wall of the insulated tank and the profiled pipe, the return flow space (109) being in fluid flow connection with the profiled pipe at an outlet end of the profiled pipe and encompassing at least partially a wall (108) of the profiled pipe along a length of the profiled pipe, and
- the flow generator unit is adapted for discharging the gases from the decomposition space (107) in a direction identical to the flow direction of the feedstock, and for generating, in the return flow space (109), a flow of said gases in a direction opposite the flow direction of the feedstock,
- wherein said purification unit is adapted for purifying the synthesis gas discharged from the return flow space (109) from haloids.

2. The apparatus according to claim 1, **characterized in that** deflector members (114) adapted for enhancing heat exchange between the synthesis gas and the wall (108) of the decomposition space (107) are arranged in the return flow space (109).

3. The apparatus according to claim 1 or 2, **characterized in that** the reactor (106) comprises more than one longitudinal decomposition space (107), and a common return flow space (109) connected thereto.

4. The apparatus according to any of claims 1 to 3, **characterized in that** the decomposition space (107) is formed by a vertical profiled pipe of which a bottom end constitutes the outlet end, the return flow space (109) being located between the profiled pipe and the inside wall of the insulated vertical tank arranged about the vertical profiled pipe, wherein the vertical profiled pipe extends from above into the vertical tank, and wherein a synthesis gas outlet (116) is formed at an upper closed end of the tank that encompasses the vertical profiled pipe.

5. The apparatus according to any of claims 1 to **4, characterized in that** the purification unit comprises a fixed-bed purification reactor (120) containing limestone and/or dolomite particles applied as sorbent material.

6. The apparatus according to claim 5, **characterized in that** the purification unit comprises two alternately switchable fixed-bed purification reactors (120) adapted for receiving the synthesis gas.

7. The apparatus according to claim 5 or 6, **characterized in that** the fixed-bed purification reactor(s) (120) has (have) a tower-like configuration, with the sorbent material being arranged on perforated holder trays along the height of the tower, the synthesis gas being introduced into the tower at the top and discharged therefrom at the bottom, and with a water inlet (121) adapted to allow the sorbent material to be washed over with water for regeneration being arranged at the top of the tower.

8. The apparatus according to any of claims 5 to 7, **characterized in that** the purification unit further comprises a fluid-bed purification reactor (123) arranged in the flow path of the synthesis gas upstream of the fixed-bed purification reactor(s) (120), and also comprises limestone and/or dolomite particles as sorbent material, with a measurement device (124) adapted for measuring the haloid content of the synthesis gas discharged from fluid-bed purification reactor (123) being connected to the synthesis gas flow space, wherein an outlet (125) adapted for discharging spent sorbent material from the fluid-bed purification reactor (123) is connected to a bottom portion of the fluid-bed purification reactor (123), the outlet (125) being connected to a first dust separator (127), and wherein an inlet (128) adapted for replenishing the fluid-bed purification reactor (123) with fresh sorbent material is connected to the upper portion of the fluid-bed purification reactor (123).

9. A method for producing synthesis gas comprising the steps of
- providing a batch from crushed waste material applied as a feedstock of the synthesis gas production, stirring the batch, and
- expelling air from the batch by flushing it with CO₂ gas,
- feeding the batch into a decomposition space (107) of a reactor (106) comprising a longitudinal decomposition space (107), generating the heat required for gasification by partially combusting the feedstock advancing in the decomposition space (107), assisting the process by also introducing oxygen into the decomposition space (107),
- also introducing, if necessary for the production of the synthesis gas, water into the decomposition space (107),
- discharging from the decomposition space (107) the flue gases and the synthesis gas generated in the decomposition space (107), and
- subjecting the synthesis gas to a purification,
**characterized in that**
- said decomposition space (107) is formed by a profiled pipe, and the reactor (106) further comprises an insulated tank arranged about the profiled pipe, wherein the profiled pipe extends into the insulated tank, and wherein a return flow space (109) is located between an inside wall of the insulated tank and the profiled pipe, the return flow space (109) being in fluid flow connection with the profiled pipe at an outlet end of the profiled pipe and encompassing at least partially a wall (108) of the profiled pipe along a length of the profiled pipe,
- discharging the gases from the decomposition space (107) in a direction identical to the flow direction of the feedstock, and generating, in the return flow space (109), a flow of said gases in a direction opposite the flow direction of the feedstock, and heating the decomposition space (107) through the wall (108) of the profiled pipe by the heat of said gases;
- wherein in said step of subjecting the synthesis gas to a purification, the synthesis gas discharged from the return flow space (109) is subjected to a purification from haloids, while keeping the temperature of the synthesis gas above 450 °C in the course of said purification.

10. The method according to claim 9, **characterized by** applying a fixed-bed purification reactor (120) containing limestone and/or dolomite particles applied as sorbent material for purifying the synthesis gas.

11. The method according to claim 10, **characterized by** alternately utilizing one of two fixed-bed purification reactors (120), the sorbent material in the unutilized one being regenerated by washing it over with water.

12. The method according to claim 10 or 11, **characterized by** passing the synthesis gas to be purified through a fluid-bed purification reactor (123) that is located upstream of the fixed-bed purification reactor(s) (120) and also contains limestone and/or dolomite particles utilized as sorbent material, continually measuring the haloid content of the synthesis gas discharged therefrom, and discharging, upon detecting an increase of haloid content, spent sorbent material from the fluid-bed purification reactor (123) through a first dust separator (127), and replenishing the fluid-bed purification reactor (123) with fresh sorbent material.

13. The method according to claim 12, **characterized by** introducing a second dust separator (130) in the flow path of the synthesis gas discharged from the fluid-bed purification reactor (123), and conveying the synthesis gas into the fixed-bed purification reactor(s) (120) from both dust separators (127, 130).

14. The method according to any of claims 9 to 13, **characterized by** passing the synthesis gas through a heat exchanger prior to and/or following purification for generating steam, utilizing the steam for energy generation, and reintroducing the water from the cooled-down synthesis gas into the decomposition space (107) of the reactor (106).

15. The method according to claim 14, **characterized by** utilizing the residual heat of the synthesis gas applying apparatus based on the ORC (Organic Rankine Cycle) principle.

## Patentansprüche

1. Vorrichtung zur Erzeugung von Synthesegas, umfassend
- eine Rühreinheit (103), die zum Rühren einer Charge aus Abfallmaterial ausgebildet ist,
- einen verschließbaren Bereich und einen CO₂-Gaseinlass (104), der mit dem verschließbaren Bereich verbunden und dazu ausgebildet ist, ein Spülen der Charge mit CO₂ zu ermöglichen, um Luft daraus auszutreiben,
- einen Reaktor (106), der einen in Längsrichtung verlaufenden Zersetzungsraum (107) umfasst, der zur Aufnahme der gerührten und mit CO₂-Gas gespülten Charge ausgebildet ist,
- einen O₂-Gaseinlass (110), der mit dem Zersetzungsraum verbunden ist,
- einen Wassereinlass (111), der mit dem Zersetzungsraum (107) verbunden ist,
- eine Strömungserzeugungseinheit, die dazu ausgebildet ist, aus dem Zersetzungsraum (107) die Rauchgase und das im Zersetzungsraum (107) erzeugte Synthesegas abzuführen, und
- eine Reinigungseinheit,
**dadurch gekennzeichnet, dass**
- der Zersetzungsraum (107) des Reaktors (106) durch ein Profilrohr gebildet ist und der Reaktor (106) ferner einen isolierten Behälter umfasst, der um das Profilrohr herum angeordnet ist, wobei sich das Profilrohr in den isolierten Behälter erstreckt und wobei zwischen einer Innenwand des isolierten Behälters und dem Profilrohr ein Rückströmraum (109) angeordnet ist, wobei der Rückströmraum (109) an einem Auslassende des Profilrohrs mit dem Profilrohr in strömungstechnischer Verbindung steht und eine Wand (108) des Profilrohrs entlang einer Länge des Profilrohrs zumindest teilweise umgibt, und
- die Strömungserzeugungseinheit dazu ausgebildet ist, die Gase aus dem Zersetzungsraum (107) in einer Richtung abzuführen, die mit der Strömungsrichtung des Einsatzmaterials identisch ist, und in dem Rückströmraum (109) eine Strömung der genannten Gase in einer der Strömungsrichtung des Einsatzmaterials entgegengesetzten Richtung zu erzeugen,
- die Reinigungseinheit dazu ausgebildet ist, das aus dem Rückströmraum (109) abgeführte Synthesegas von Halogeniden zu reinigen.

2. Vorrichtung nach Anspruch 1, **dadurch gekennzeichnet, dass** Ablenkelemente (114), die dazu ausgebildet sind, den Wärmeaustausch zwischen dem Synthesegas und der Wand (108) des Zersetzungsraums (107) zu verbessern, in dem Rückströmraum (109) angeordnet sind.

3. Vorrichtung nach Anspruch 1 oder 2, **dadurch gekennzeichnet, dass** der Reaktor (106) mehr als einen in Längsrichtung verlaufenden Zersetzungsraum (107) und einen gemeinsamen, damit verbundenen Rückströmraum (109) umfasst.

4. Vorrichtung nach einem der Ansprüche 1 bis 3, **dadurch gekennzeichnet, dass** der Zersetzungsraum (107) durch ein vertikales Profilrohr gebildet ist, dessen unteres Ende das Auslassende bildet, wobei der Rückströmraum (109) zwischen dem Profilrohr und der Innenwand des isolierten vertikalen Behälters angeordnet ist, der um das vertikale Profilrohr herum angeordnet ist, wobei sich das vertikale Profilrohr von oben in den vertikalen Behälter erstreckt und wobei an einem oberen geschlossenen Ende des das vertikale Profilrohr umgebenden Behälters ein Synthesegasauslass (116) ausgebildet ist.

5. Vorrichtung nach einem der Ansprüche 1 bis 4, **dadurch gekennzeichnet, dass** die Reinigungseinheit einen Festbett-Reinigungsreaktor (120) umfasst, der Kalkstein- und/oder Dolomitpartikel enthält, die als Sorptionsmaterial eingesetzt werden.

6. Vorrichtung nach Anspruch 5, **dadurch gekennzeichnet, dass** die Reinigungseinheit zwei wechselweise schaltbare Festbett-Reinigungsreaktoren (120) umfasst, die zur Aufnahme des Synthesegases ausgebildet sind.

7. Vorrichtung nach Anspruch 5 oder 6, **dadurch gekennzeichnet, dass** der Festbett-Reinigungsreaktor bzw. die Festbett-Reinigungsreaktoren (120) eine turmartige Ausgestaltung aufweist bzw. aufweisen, wobei das Sorptionsmaterial auf perforierten Trägerböden entlang der Höhe des Turms angeordnet ist, das Synthesegas an der Oberseite des Turms eingeleitet und an dessen Unterseite abgeführt wird und an der Oberseite des Turms ein Wassereinlass (121) angeordnet ist, der dazu ausgebildet ist, das Sorptionsmaterial zur Regeneration mit Wasser zu überspülen.

8. Vorrichtung nach einem der Ansprüche 5 bis 7, **dadurch gekennzeichnet, dass** die Reinigungseinheit ferner einen Wirbelbett-Reinigungsreaktor (123) umfasst, der im Strömungsweg des Synthesegases stromaufwärts des Festbett-Reinigungsreaktors bzw. der Festbett-Reinigungsreaktoren (120) angeordnet ist und ebenfalls Kalkstein- und/oder Dolomitpartikel als Sorptionsmaterial enthält, wobei eine Messeinrichtung (124), die dazu ausgebildet ist, den Gehalt des aus dem Wirbelbett-Reinigungsreaktor (123) abgeführten Synthesegases an Halogenide zu messen, mit dem Synthesegas-Strömungsraum verbunden ist, wobei ein Auslass (125), der zum Abführen von verbrauchtem Sorptionsmaterial aus dem Wirbelbett-Reinigungsreaktor (123) ausgebildet ist, mit einem unteren Abschnitt des Wirbelbett-Reinigungsreaktors (123) verbunden ist, wobei der Auslass (125) mit einem ersten Staubabscheider (127) verbunden ist und wobei ein Einlass (128), der zum Nachfüllen des Wirbelbett-Reinigungsreaktors (123) mit frischem Sorptionsmaterial ausgebildet ist, mit einem oberen Abschnitt des Wirbelbett-Reinigungsreaktors (123) verbunden ist.

9. Verfahren zur Erzeugung von Synthesegas, umfassend die Schritte:
- Bereitstellen einer Charge aus zerkleinertem Abfallmaterial, das als Einsatzmaterial für die Synthesegaserzeugung verwendet wird, und Rühren der Charge,
- Austreiben von Luft aus der Charge durch Spülen der Charge mit CO₂-Gas,
- Einbringen der Charge in einen Zersetzungsraum (107) eines Reaktors (106), der einen in Längsrichtung verlaufenden Zersetzungsraum (107) umfasst, Erzeugen der für die Vergasung erforderlichen Wärme durch teilweises Verbrennen des sich im Zersetzungsraum (107) fortbewegenden Einsatzmaterials sowie Unterstützen des Prozesses durch zusätzliches Einleiten von Sauerstoff in den Zersetzungsraum (107),
- ferner Einleiten von Wasser in den Zersetzungsraum (107), sofern dies für die Erzeugung des Synthesegases erforderlich ist,
- Abführen der Rauchgase und des im Zersetzungsraum (107) erzeugten Synthesegases aus dem Zersetzungsraum (107), und
- Unterziehen des Synthesegases einer Reinigung,
**dadurch gekennzeichnet, dass**
- der Zersetzungsraum (107) durch ein Profilrohr gebildet ist und der Reaktor (106) ferner einen isolierten Behälter umfasst, der um das Profilrohr herum angeordnet ist, wobei sich das Profilrohr in den isolierten Behälter erstreckt und wobei zwischen einer Innenwand des isolierten Behälters und dem Profilrohr ein Rückströmraum (109) angeordnet ist, wobei der Rückströmraum (109) an einem Auslassende des Profilrohrs mit dem Profilrohr in strömungstechnischer Verbindung steht und eine Wand (108) des Profilrohrs entlang einer Länge des Profilrohrs zumindest teilweise umgibt,
- die Gase aus dem Zersetzungsraum (107) in einer Richtung abgeführt werden, die mit der Strömungsrichtung des Einsatzmaterials identisch ist, und in dem Rückströmraum (109) eine Strömung der genannten Gase in einer der Strömungsrichtung des Einsatzmaterials entgegengesetzten Richtung erzeugt wird, wobei der Zersetzungsraum (107) durch die Wand (108) des Profilrohrs mittels der Wärme der genannten Gase erwärmt wird;
- wobei dem Schritt des Unterziehens des Synthesegases einer Reinigung das aus dem Rückströmraum (109) abgeführte Synthesegas unter Aufrechterhaltung einer Temperatur des Synthesegases von über 450 °C während der Reinigung von Halogeniden gereinigt wird.

10. Verfahren nach Anspruch 9, **dadurch gekennzeichnet, dass** zur Reinigung des Synthesegases ein Festbett-Reinigungsreaktor (120) eingesetzt wird, der Kalkstein- und/oder Dolomitpartikel als Sorptionsmaterial enthält.

11. Verfahren nach Anspruch 10, **dadurch gekennzeichnet, dass** abwechselnd einer von zwei Festbett-Reinigungsreaktoren (120) verwendet wird, wobei das Sorptionsmaterial in dem nicht verwendeten Reaktor durch Überspülen mit Wasser regeneriert wird.

12. Verfahren nach Anspruch 10 oder 11, **dadurch gekennzeichnet, dass** das zu reinigende Synthesegas durch einen Wirbelbett-Reinigungsreaktor (123) geführt wird, der stromaufwärts des Festbett-Reinigungsreaktors bzw. der Festbett-Reinigungsreaktoren (120) angeordnet ist und ebenfalls Kalkstein- und/oder Dolomitpartikel als Sorptionsmaterial enthält, dass der Gehalt des daraus abgeführten Synthesegases an Halogenide kontinuierlich gemessen wird und dass bei Feststellen eines Anstiegs dieses Gehalts verbrauchtes Sorptionsmaterial aus dem Wirbelbett-Reinigungsreaktor (123) durch einen ersten Staubabscheider (127) abgeführt und der Wirbelbett-Reinigungsreaktor (123) mit frischem Sorptionsmaterial nachgefüllt wird.

13. Verfahren nach Anspruch 12, **dadurch gekennzeichnet, dass** ein zweiter Staubabscheider (130) in den Strömungsweg des aus dem Wirbelbett-Reinigungsreaktor (123) abgeführten Synthesegases eingebracht wird und dass das Synthesegas von beiden Staubabscheidern (127, 130) in den Festbett-Reinigungsreaktor bzw. die Festbett-Reinigungsreaktoren (120) geleitet wird.

14. Verfahren nach einem der Ansprüche 9 bis 13, **dadurch gekennzeichnet, dass** das Synthesegas vor und/oder nach der Reinigung zur Erzeugung von Wasserdampf durch einen Wärmetauscher geleitet wird, der Wasserdampf zur Energieerzeugung genutzt wird und das aus dem abgekühlten Synthesegas stammende Wasser wieder in den Zersetzungsraum (107) des Reaktors (106) eingeleitet wird.

15. Verfahren nach Anspruch 14, **dadurch gekennzeichnet, dass** die Restwärme des Synthesegases unter Verwendung einer auf dem ORC-Prinzip (Organic Rankine Cycle) beruhenden Vorrichtung genutzt wird.

## Revendications

1. Dispositif de production de gaz de synthèse, comprenant :
- une unité d'agitation (103) conçue pour agiter une charge de déchets,
- une zone pouvant être fermée et une entrée de gaz CO₂ (104) qui est reliée à la zone pouvant être fermée et qui est conçue pour permettre de balayer la charge au CO₂ afin d'en expulser l'air,
- un réacteur (106) comprenant un espace de décomposition longitudinal (107) conçu pour recevoir la charge ayant été agitée et balayée au gaz CO₂,
- une entrée de gaz O₂ (110) reliée à l'espace de décomposition,
- une entrée d'eau (111) reliée à l'espace de décomposition (107),
- une unité de génération d'écoulement conçue pour évacuer de l'espace de décomposition (107) les gaz de combustion et le gaz de synthèse produit dans l'espace de décomposition (107), et
- une unité de purification,
**caractérisé en ce que :**
- l'espace de décomposition (107) du réacteur (106) est formé par un tube profilé, et le réacteur (106) comprend en outre une cuve isolée disposée autour du tube profilé, le tube profilé s'étendant dans la cuve isolée, et un espace d'écoulement de retour (109) étant situé entre une paroi intérieure de la cuve isolée et le tube profilé, l'espace d'écoulement de retour (109) étant en communication fluidique avec le tube profilé à une extrémité de sortie du tube profilé et entourant au moins partiellement une paroi (108) du tube profilé sur une longueur du tube profilé, et
- l'unité de génération d'écoulement est conçue pour évacuer les gaz de l'espace de décomposition (107) dans une direction identique à la direction d'écoulement de la matière d'alimentation, et pour générer, dans l'espace d'écoulement de retour (109), un écoulement desdits gaz dans une direction opposée à la direction d'écoulement de la matière d'alimentation,
- ladite unité de purification est conçue pour éliminer les composés halogénés du gaz de synthèse évacué de l'espace d'écoulement de retour (109).

2. Dispositif selon la revendication 1, **caractérisé en ce que** des éléments déflecteurs (114), conçus pour améliorer l'échange de chaleur entre le gaz de synthèse et la paroi (108) de l'espace de décomposition (107), sont disposés dans l'espace d'écoulement de retour (109).

3. Dispositif selon la revendication 1 ou 2, **caractérisé en ce que** le réacteur (106) comprend plus d'un espace de décomposition longitudinal (107) et un espace d'écoulement de retour commun (109) qui y est relié.

4. Dispositif selon l'une quelconque des revendications 1 à 3, **caractérisé en ce que** l'espace de décomposition (107) est formé par un tube profilé vertical dont une extrémité inférieure constitue l'extrémité de sortie, l'espace d'écoulement de retour (109) étant situé entre le tube profilé et la paroi intérieure de la cuve verticale isolée disposée autour du tube profilé vertical, le tube profilé vertical s'étendant dans la cuve verticale depuis le haut, et une sortie de gaz de synthèse (116) étant formée à une extrémité supérieure fermée de la cuve entourant le tube profilé vertical.

5. Dispositif selon l'une quelconque des revendications 1 à 4, **caractérisé en ce que** l'unité de purification comprend un réacteur de purification à lit fixe (120) contenant des particules de calcaire et/ou de dolomie utilisées comme matériau sorbant.

6. Dispositif selon la revendication 5, **caractérisé en ce que** l'unité de purification comprend deux réacteurs de purification à lit fixe (120), commutables en alternance et conçus pour recevoir le gaz de synthèse.

7. Dispositif selon la revendication 5 ou 6, **caractérisé en ce que** le réacteur ou les réacteurs de purification à lit fixe (120) présentent une configuration en forme de tour, le matériau sorbant étant disposé sur des plateaux de support perforés sur la hauteur de la tour, le gaz de synthèse étant introduit dans la tour par le haut et évacué par le bas, et une entrée d'eau (121), conçue pour permettre le lavage à l'eau du matériau sorbant en vue de sa régénération, étant disposée au sommet de la tour.

8. Dispositif selon l'une quelconque des revendications 5 à 7, **caractérisé en ce que** l'unité de purification comprend en outre un réacteur de purification à lit fluidisé (123), disposé sur le trajet d'écoulement du gaz de synthèse en amont du ou des réacteurs de purification à lit fixe (120), et comprenant également des particules de calcaire et/ou de dolomie en tant que matériau sorbant, un dispositif de mesure (124), conçu pour mesurer la teneur en composés halogénés du gaz de synthèse évacué du réacteur de purification à lit fluidisé (123), étant relié à l'espace d'écoulement du gaz de synthèse, une sortie (125), conçue pour évacuer le matériau sorbant usagé du réacteur de purification à lit fluidisé (123), étant reliée à une partie inférieure du réacteur de purification à lit fluidisé (123), ladite sortie (125) étant reliée à un premier séparateur de poussières (127), et une entrée (128), conçue pour réapprovisionner le réacteur de purification à lit fluidisé (123) en matériau sorbant frais, étant reliée à une partie supérieure du réacteur de purification à lit fluidisé (123).

9. Procédé de production de gaz de synthèse, comprenant les étapes consistant à :
- fournir une charge de déchets broyés utilisés comme matière d'alimentation pour la production du gaz de synthèse, agiter la charge, et
- expulser l'air de la charge en la balayant au gaz CO₂,
- introduire la charge dans un espace de décomposition (107) d'un réacteur (106) comprenant un espace de décomposition longitudinal (107), générer la chaleur nécessaire à la gazéification en brûlant partiellement la matière d'alimentation progressant dans l'espace de décomposition (107), et faciliter le procédé en introduisant également de l'oxygène dans l'espace de décomposition (107),
- introduire également de l'eau dans l'espace de décomposition (107), si cela est nécessaire à la production du gaz de synthèse,
- évacuer de l'espace de décomposition (107) les gaz de combustion et le gaz de synthèse produit dans l'espace de décomposition (107), et
- soumettre le gaz de synthèse à une purification,
**caractérisé en ce que :**
- ledit espace de décomposition (107) est formé par un tube profilé, et le réacteur (106) comprend en outre une cuve isolée disposée autour du tube profilé, le tube profilé s'étendant dans la cuve isolée, et un espace d'écoulement de retour (109) étant situé entre une paroi intérieure de la cuve isolée et le tube profilé, l'espace d'écoulement de retour (109) étant en communication fluidique avec le tube profilé à une extrémité de sortie du tube profilé et entourant au moins partiellement une paroi (108) du tube profilé sur une longueur du tube profilé,
- les gaz sont évacués de l'espace de décomposition (107) dans une direction identique à la direction d'écoulement de la matière d'alimentation, et un écoulement desdits gaz est généré dans l'espace d'écoulement de retour (109) dans une direction opposée à la direction d'écoulement de la matière d'alimentation, l'espace de décomposition (107) étant chauffé à travers la paroi (108) du tube profilé par la chaleur desdits gaz, et
- lors de ladite étape consistant à soumettre le gaz de synthèse à une purification, le gaz de synthèse évacué de l'espace d'écoulement de retour (109) est purifié de ses composés halogénés tout en maintenant la température du gaz de synthèse au-dessus de 450 °C au cours de ladite purification.

10. Procédé selon la revendication 9, **caractérisé par** l'utilisation, pour purifier le gaz de synthèse, d'un réacteur de purification à lit fixe (120) contenant des particules de calcaire et/ou de dolomie utilisées comme matériau sorbant.

11. Procédé selon la revendication 10, **caractérisé par** l'utilisation en alternance de l'un de deux réacteurs de purification à lit fixe (120), le matériau sorbant contenu dans celui qui n'est pas utilisé étant régénéré par lavage à l'eau.

12. Procédé selon la revendication 10 ou 11, **caractérisé par** le fait de faire passer le gaz de synthèse à purifier à travers un réacteur de purification à lit fluidisé (123) situé en amont du ou des réacteurs de purification à lit fixe (120) et contenant également des particules de calcaire et/ou de dolomie utilisées comme matériau sorbant, de mesurer en continu la teneur en composés halogénés du gaz de synthèse qui en est évacué, et d'évacuer, lorsqu'une augmentation de la teneur en composés halogénés est détectée, le matériau sorbant usagé du réacteur de purification à lit fluidisé (123) par l'intermédiaire d'un premier séparateur de poussières (127), et de réapprovisionner le réacteur de purification à lit fluidisé (123) en matériau sorbant frais.

13. Procédé selon la revendication 12, **caractérisé par** l'introduction d'un second séparateur de poussières (130) sur le trajet d'écoulement du gaz de synthèse évacué du réacteur de purification à lit fluidisé (123), et par l'acheminement du gaz de synthèse provenant des deux séparateurs de poussières (127, 130) vers le ou les réacteurs de purification à lit fixe (120).

14. Procédé selon l'une quelconque des revendications 9 à 13, **caractérisé par** le fait de faire passer le gaz de synthèse dans un échangeur de chaleur avant et/ou après la purification afin de produire de la vapeur, d'utiliser la vapeur pour produire de l'énergie et de réintroduire l'eau provenant du gaz de synthèse refroidi dans l'espace de décomposition (107) du réacteur (106).

15. Procédé selon la revendication 14, **caractérisé par** l'utilisation de la chaleur résiduelle du gaz de synthèse au moyen d'un dispositif fondé sur le principe ORC (Organic Rankine Cycle).
